# EUROPÄISCHE PATENTSCHRIFT

(11) **EP 0 850 205 B1**
(45) Veröffentlichungstag und Bekanntmachung des Hinweises auf die Patenterteilung: **09.08.2000**
(21) Anmeldenummer: 97925812.6
(22) Anmeldetag: 24.06.1997
(51) Int. Cl.: C04B 7/24, A62D 3/00

(54) **VERFAHREN ZUR ENTSORGUNG VON FASERZEMENTABFALLPRODUKTEN**
METHOD FOR DISPOSING OF FIBRE CEMENT WASTE PRODUCTS
PROCEDE D'ELIMINATION DES DECHETS EN FIBROCIMENT

(30) Priorität: 15.07.1996 CH 177196
(43) Veröffentlichungstag der Anmeldung: 01.07.1998
(73) Patentinhaber: ETERNIT AG, CH-8867 Niederurnen (CH)
(72) Erfinder: FETZ, Linus, B., CH-5702 Niederlenz (CH); CALUORI, André, CH-7013 Domat/Ems (CH)
(74) Vertreter: Troesch Scheidegger Werner AG
(86) Internationale Anmeldenummer: CH9700248
(87) Internationale Veröffentlichungsnummer: WO9802392

(56) Entgegenhaltungen:
- EP-A- 0 688 742
- DE-A- 3 728 787
- DE-A- 4 330 551
- DE-A- 4 444 522
- DE-A- 19 509 706
- "ZEMENTGEBUNDENE ASBESTPRODUKTE ERFOLGREICH IM KLINKERBRENNPROZESS ENTSORGT UND VERWERTET CEMENT-BOUND ASBESTOS PRODUCTS SUCCESSFULLY DISPOSED OF AND RECYLCED IN THE CLINKER BURNING PROCESS" ZKG INTERNATIONAL, Bd. 48, Nr. 11, 1995, Seite A33/A34 XP000628591

## Beschreibung

Die vorliegende Erfindung betrifft die Entsorgung von Faserzementabfallprodukten, wie z.B. Asbestzementprodukten, insbesondere ein Verfahren zur Entsorgung solcher Produkte, bei welchen die genannten Produkte zerkleinert und zum Recycling in den Drehrohrofen einer Zementproduktionsanlage eingebracht werden.

Dem Fachmann ist bekannt, dass Faserzementprodukte, insbesondere Mineralfaserprodukte, wie z.B. Asbestzementprodukte, im Grunde genommen dieselbe Grundzusammensetzung aufweisen wie die Rohstoffe für die Zementproduktion (Kalkstein, Mergel, Ton). Sie bestehen zu 90 % aus erhärtetem Portlandzement.

Damit bieten sich die zu entsorgenden Produkte grundsätzlich für ein Recycling an. In diesem Sinne wurde vorgeschlagen, die zu entsorgenden Faserzementprodukte nicht auf einfachste Weise in einer Deponie einzulagern (gesetzlich zulässig), sondern zur erneuten Zementherstellung wieder zu verwenden.

Die zu entsorgenden Produkte fallen spätestens am Ende ihrer Gebrauchsdauer an. Ein Teil der Produkte fällt bei der anfänglichen Produktion bereits an (Abfälle, Ausschuss). Heutzutage fallen massemässig zum grössten Teil Asbestzementabfallprodukte aus dem Rückbau von Gebäuden zur Entsorgung an, mit der Zeit wird es sich auch um asbestfreien Faserzement handeln.

Für ein Recyling müssen die Produkte zerkleinert werden. Bisher war die Fachwelt der Meinung, dass dazu das zu entsorgende Material zu feinem Mehl zu zerkleinern war, um in dieser Form direkt in die Flamme des Drehofens einer Zementproduktionsanlage eingeblasen zu werden. Dieses Mahlen zu feinem Pulver ist mit einem hohen Energiebedarf verbunden.

Der Grund dafür liegt darin, dass die Zersetzung von Asbestfasern zwischen 400°C und 1000°C liegt (Schmelztemperaturen liegen zwischen 1100°C und 1500°C). Es wurde festgestellt, dass nach einer Behandlung bei einer Temperatur von mehr als 1250°C keine Faserreste mehr gefunden werden konnten.

Es herrschte aus diesen Gründen die Meinung vor, dass die mehlartig zerkleinerten Produkte in einer Temperaturzone von min. 1250°C beizugeben seien, was praktisch ein Einbringen in die Flamme des Drehofens bedeutete.

Aufgabe der vorliegenden Erfindung war nun die Entsorgung von Faserzementprodukten, insbesondere Asbestzementprodukten, durch Recycling im Drehofen einer Zementproduktionsanlage, welche einen möglichst geringen Aufwand bei der Zerkleinerung erforderte, ohne das angestrebte Resultat, nämlich die vollständige Eliminierung der Fasern, zu beeinträchtigen.

Diese Aufgabe konnte nun erfindungsgemäss überraschenderweise durch die Merkmale gemäss dem kennzeichnenden Teil von Anspruch 1 gelöst werden.

Dank diesem Verfahren kann der Energieaufwand bei der Zerkleinerung des zu entsorgenden Materials wesentlich gesenkt werden. Obwohl das zu entsorgende Material bereits in einer Zone mit lediglich ca. 800°C Materialtemperatur und ca. 1250°C Gastemperatur in den Drehofen eingegeben wird, vorzugsweise in den normalen Rohmaterialstrom, und dieses erst anschliessend Zonen mit höherer Temperatur (ca. 1250°C) durchläuft, wurde ein Zementklinker erhalten, welcher sich nicht vom "normal" produzierten Klinker unterscheidet.

Besonders vorteilhafte Ausführungsformen der Erfindung sind in den abhängigen Ansprüchen definiert.

Die Erfindung wird nachstehend anhand eines Ausführungsbeispiels noch näher beschrieben.

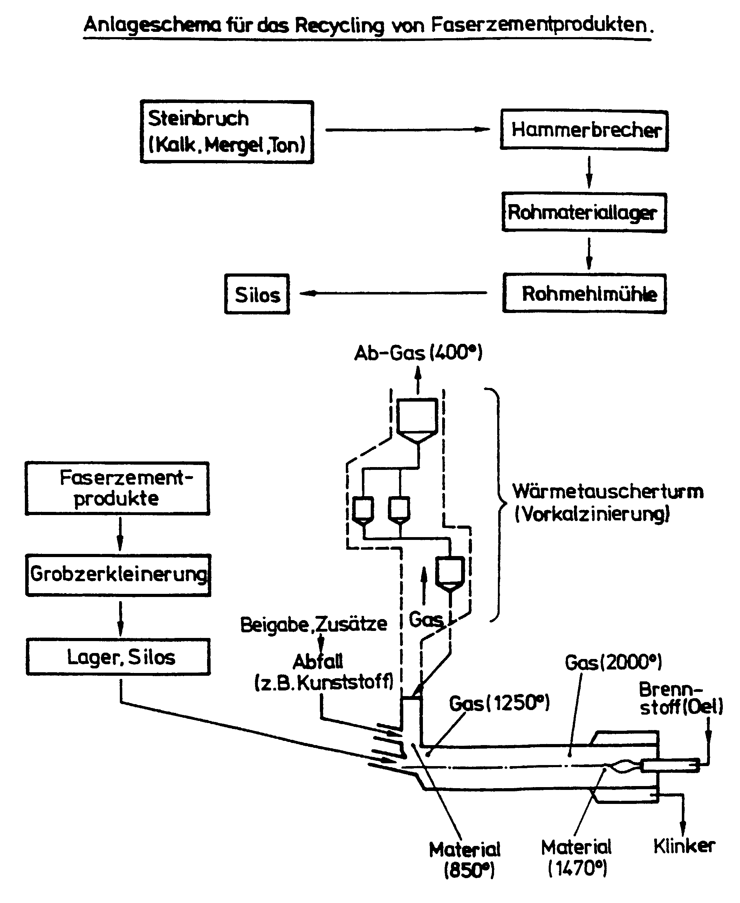

Die einzige Figur der Zeichnung zeigt rein schematisch eine Anlage zur Zementproduktion, welche sich zur Durchführung des erfindungsgemässen Verfahrens eignet.

Bei der im Schema gezeigten Anlage zur Produktion von Zement wird abgebautes Rohmaterial (Kalkstein, Mergel, Ton) in einem Brecher zerkleinert, dieses gelagert und vom Lager über eine Rohmehlmühle und Homogenisierungssilos in einen Wärmetauscherturm, wo eine Vorkalzinierung stattfindet, in den eigentlichen Drehofen eingebracht, welcher üblicherweise mittels einer Oel- oder Kohleverbrennung Gas von 2000°C erzeugt und dieses im Gegenstrom (zum Rohmaterialstrom) über einen Kamin (mit Rauchgasreinigung) in die Atmosphäre austritt.

Beim Drehofen befindet sich der Brenner (Flamme) am Ausgangsende, wo auch der entstehende Klinker in den Kühler austritt.

Am Eintrittsende des Drehofens werden das 800-850°C heisse Mehl aus dem Wärmetauscher und ggf. Abfallprodukte, wie Altreifen, Kunststoffabfälle usw., zugeführt.

Statt wie bisher das zerkleinerte Faserzementmaterial in Pulverform in die Flamme einzublasen, wird dieses nun in Bruchstücken ebenfalls am Ofeneingang bei Temperaturen von ca. 800°C - 850°C eingegeben und im Zuge des Weitertransportes zusammen mit dem Hauptmaterialstrom unter Umwandlung der Faseranteile zu Zementklinker umgewandelt.

Das Faserzementmaterial muss lediglich grobzerkleinert werden. Durch den Eintritt in eine Ofenzone von min. 800°C ist gewährleistet, dass keine nicht umgewandelten Fasern in irgend einer Form in die Umgebung gelangen können.

Der entstehende Klinker wird anschliessend in an sich bekannter Weise zum Fertigprodukt Zement verarbeitet.

## Patentansprüche

1. Verfahren zur Entsorgung von Faserzementabfallprodukten, insbesondere Asbestzementprodukten, bei welchem die genannten Produkte zerkleinert und zum Recycling in den Drehrohrofen einer Zementproduktionsanlage eingebracht werden, dadurch gekennzeichnet, dass die zu entsorgenden Faserzementabfallprodukte lediglich einer Grobzerkleinerung unterworfen werden und das so zerkleinerte Gut in eine Eintrittszone des Drehofens mit einer Temperatur von wenigstens 800°C eingegeben und dann durch Zonen höherer Temperatur unter Schmelze-Bildung weiterbefördert und zu Zementklinker umgewandelt werden und letzterer danach zu Zement vermahlen wird.

2. Verfahren nach Anspruch 1, dadurch gekennzeichnet, dass die zu entsorgenden Produkte in grobzerkleinerter Form bei der Eingabestelle dem Heissmehl im Hauptmaterialstrom für die Zementherstellung beigemischt werden.

3. Verfahren nach Anspruch 1 oder 2, dadurch gekennzeichnet, dass die zu entsorgenden grobzerkleinerten Faserprodukte am Eingang des Drehofens in eine Zone mit ca. 850°C Materialtemperatur und ca. 1200°C Gastemperatur eingebracht werden.

## Claims

1. A method for disposing fibre cement waste products, particularly asbestos cement products, in which said products are crushed and, in view of their recycling, charged into the revolving tubular kiln of a cement production plant, characterised in that said fibre cement waste products to be disposed are subjected only to a coarse crushing and the thus crushed product is charged into an entry zone of the revolving kiln with a temperature of at least 800°C, thereafter advanced through zones of higher temperature under formation of a melt and transformed into cement clinker, the latter being finally pulverized to form cement.

2. The method of claim 1, characterised in that said products to be disposed are added in coarse crushed form at the place of entry to the hot powder of the stream for main materials for the cement production.

3. The method of claim 1 or 2, characterised in that said fibre products to be disposed in coarse crushed form are charged at the entry of the revolving kiln into a zone having a material temperature of about 850°C and a gas temperature of about 1200°C.

## Revendications

1. Procédé d'élimination de déchets en fibre ciment, notamment produits en amiante-ciment, dans lequel les produits sont fragmentés et ensuite chargés dans le four tubulaire rotatif d'une installation de production de ciment en vue de leur recyclement, caractérisé en ce que les déchets en fibre ciment à éliminer ne sont soumis qu'à une fragmentation grossière, le matériel ainsi fragmenté étant chargé dans une zone d'entrée du four rotatif avec une température d'au moins 800°C pour ensuite être avancé à travers des zones à température plus élevée sous formation d'une fonte transformée ensuite en clinker, ce dernier étant finalement broyé pour former du ciment.

2. Procédé selon la revendication 1, caractérisé en ce que les produits à éliminer sous forme grossièrement fragmentée sont ajoutés, à l'emplacement de chargement, à la poudre chaude dans le courant de matériel principal servant à la production de ciment.

3. Procédé selon la revendication 1 ou 2, caractérisé en ce que les produits à fibres à éliminer sous forme grossièrement fragmentée sont chargés à l'entrée du rotatif dans une zone avec une température de matériel d'environ 850°C et une température de gaz d'environ 1200°C.
